# EUROPÄISCHE PATENTSCHRIFT

(11) **EP 1 515 878 B1**
(45) Veröffentlichungstag und Bekanntmachung des Hinweises auf die Patenterteilung: **17.05.2006**
(21) Anmeldenummer: 03761460.9
(22) Anmeldetag: 13.06.2003
(51) Int. Cl.: B60R 22/195

(54) **STRAFFVORRICHTUNG MIT EINEM ABGEDICHTETEN GASGENERATORGEHÄUSE**
TENSIONING DEVICE COMPRISING A SEALED GAS GENERATOR HOUSING
DISPOSITIF DE TENSION COMPRENANT UN LOGEMENT DE GENERATEUR DE GAZ ETANCHEIFIE

(30) Priorität: 26.06.2002 DE 10228617
(43) Veröffentlichungstag der Anmeldung: 23.03.2005
(73) Patentinhaber: AUTOLIV DEVELOPMENT AB, 447 83 Vargarda (SE)
(72) Erfinder: THUNDERCLIFFE, Mark, Swanmore, Hampshire (GB); SCHÜTZE, Thomas, 82205 Gilching (DE)
(74) Vertreter: Müller, Karl-Ernst
(86) Internationale Anmeldenummer: PCT/EP2003/006226
(87) Internationale Veröffentlichungsnummer: WO 2004/002785

(56) Entgegenhaltungen:
- DE-A- 19 918 596
- US-A- 5 897 140
- US-A- 6 036 274

## Beschreibung

Die Erfindung betrifft eine Straffvorrichtung für einen Sicherheitsgurt mit einem Rohr zur Führung eines druckgasgetriebenen Kolbens und mit einem an den Kolben angeschlossenen und mit einer zu straffenden Sicherheitsgurtkomponente verbundenen Seil, wobei ein der Aufnahme des Gasgenerators dienendes Gasgeneratorgehäuse in dem Rohr angeordnet und zwischen Gasgeneratorgehäuse und Kolben ein Druckraum belassen ist, und wobei das Seil in paralleler Anordnung zum Gasgenerator durch das Gasgeneratorgehäuse und durch den Druckraum bis zum Kolben geführt ist.

Eine Straffvorrichtung mit den vorgenannten Merkmalen ist in der DE 199 18 596 A1 beschrieben; aufgrund der parallelen Ausrichtung von Gasgenerator und Seil und deren gemeinsamer Anordnung in dem sie aufnehmenden und in das Rohr eingesetzten Gasgeneratorgehäuse entsteht das Problem, daß die bei Auslösung des Gasgenerators in den Druckraum des Rohres einströmenden Gase zum Teil längs des in dem Gasgeneratorgehäuse angelegten Durchgangskanals für das Seil abströmen können. Da dieser Durchgangskanal zur Vereinfachung der Montage der Straffvorrichtung in seinem Durchmesser ein gewisses Übermaß bezüglich des Seildurchmessers aufweist, sind die Leckageverluste an Gas entsprechend groß. Da diese Gasverluste für den Antrieb des Kolbens nicht zur Verfügung stehen, muß der Gasgenerator für die Erzeugung einer entsprechend großen Gasmenge ausgelegt werden.

Der Erfindung liegt daher die Aufgabe zugrunde, bei einer Straffvorrichtung mit den gattungsgemäßen Merkmalen das Auftreten von Gasleckagen zu vermeiden und so die mit dem Gasgenerator erzeugte Gasmenge möglichst vollständig zum Antrieb des Kolbens auszunutzen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß in dem Rohr eine den Druckraum gegen das Gasgeneratorgehäuse abdichtende und sich bei Druckbeaufschlagung gegen das Gasgeneratorgehäuse abstützende Dichtung angeordnet ist und in dem Dichtungskörper Durchtrittsöffnungen für den aus dem Gasgeneratorgehäuse in den Druckraum vorstehenden Gasgenerator und das Seil angeordnet sind. Mit der Erfindung ist der Vorteil verbunden, daß aufgrund der Anordnung der Dichtung im Bereich des Druckraumes der in diesem bei Auslösung des Gasgenerators sich aufbauende Druck den Dichtungskörper gegen das Gasgeneratorgehäuse als Widerlager preßt, so daß die Dichtwirkung der Dichtung unterstützt wird. Weiterhin hat der Durchtritt des Gasgenerators durch die Dichtung den Vorteil, daß die Dichtung von dem Gasgenerator formlich gestützt wird und damit in ihrer Solllage an der Rohrinnenwand anliegend gehalten wird.

Nach einem Ausführungsbeispiel der Erfindung ist vorgesehen, daß der Dichtungskörper in Verlängerung der Durchtrittsöffnung für das Seil einen axial in den Druckraum vorragenden und das Seil umschließenden Ansatz aufweist, dessen Außenfläche von dem Dichtungskörper in Richtung auf das Seil geneigt ist; hiermit ist der Vorteil verbunden, daß der auf die schräge Außenfläche des Ansatzes einwirkende, in dem Druckraum anstehende Druck den Ansatz konzentrisch zusammenpreßt und damit die Dichtwirkung gegen das durch den Ansatz geführte Seil verbessert. Dies ist insbesondere dann eine vorteilhafte Maßnahme, wenn zur Erleichterung der Montage der Innendurchmesser der Durchtrittsöffnung für das Seil in dem Dichtungskörper mit einem kleinen Übermaß gegenüber dem Seildurchmesser ausgebildet ist.

Es kann vorgesehen sein, daß der Innendurchmesser der Durchtrittsöffnung für das Seil gleichgroß ist dem Durchmesser des Seils, wobei in diesem Fall die Montage der Straffvorrichtung etwas schwieriger ist.

Es ist auch nicht ausgeschlossen, daß der Durchmesser der Durchtrittsöffnung für das Seil in dem Dichtungskörper geringer ist als der Durchmesser des Seils; in diesem Fall muß der Dichtungskörper bei der Montage der Straffvorrichtung mit entsprechender Kraftausübung auf das muß der Dichtungskörper bei der Montage der Straffvorrichtung mit entsprechender Kraftausübung auf das Seil aufgefädelt werden; allerdings wird hierdurch die Dichtwirkung des Dichtungskörper gegenüber dem Seil von Beginn an verbessert.

Zur Erleichterung der Montage aber auch im Hinblick auf eine dichte Anlage des Dichtungskörpers an der Stirnfläche des Gasgeneratorgehäuses kann vorgesehen sein, daß der Dichtungskörper gegenüber dem Gasgeneratorgehäuse zentriert ist.

In einer ersten Ausführungsform kann dabei vorgesehen sein, daß das Gasgeneratorgehäuse axial vorstehende Zapfen und der Dichtungskörper auf die Zapfen aufsteckbare Aufnahmeöffnungen aufweisen.

Alternativ kann der Dichtungskörper in der Verlängerung seiner Durchtrittsöffnung für das Seil einen axial zum Gasgeneratorgehäuse vorspringenden Vorsprung und das Gasgeneratorgehäuse in dem von dem Vorsprung des Dichtungskörpers erfaßten Bereich einen entsprechenden Rücksprung aufweisen.

Wiederum zur Verbesserung der Montage ist nach einem Ausführungsbeispiel der Erfindung vorgesehen, daß die sich durch den Vorsprung erstreckende Durchtrittsöffnung für das Seil sich am Ende des Vorsprunges trichterförmig erweitert.

Im einzelnen kann vorgesehen sein, daß zwischen der Komponente des Sicherheitsgurtes und dem Kolben ein Doppelseil angeordnet ist und der Dichtungskörper zwei Durchtrittsöffnungen für die beiden Seile des Doppelseils aufweist.

Zur Verbesserung der Dichtwirkung der Dichtung kann vorgesehen sein, daß der Dichtungskörper auf seinem äußeren, gegen die Wandung des Rohres anliegenden Umfang eine Dichtlippe aufweist.

Soweit vorgesehen ist, daß der Dichtungskörper aus einem elastischen Material, vorzugsweise aus einem geeigneten Kunststoff besteht, ergibt sich daraus, daß der in dem Druckraum sich bildende Überdruck die sich gegen des Gasgeneratorgehäuse als Widerlager abstützende Dichtung zusammenpreßt, so daß sich der Dichtungskörper entsprechend aufweitet und dadurch seine Dichtwirkung verbessert.

Entsprechend kann vorgesehen sein, daß das Gasgeneratorgehäuse an seinem dem Druckraum gegenüberliegenden Ende gegen das Rohr abgedichtet ist.

In der Zeichnung sind Ausführungsbeispiele der Erfindung wiedergegeben, welche nachstehend beschrieben sind. Es zeigen:
- Fig. 1: eine Straffvorrichtung in der Ausbildung als Schloßstraffer in einer geschnittenen Seitenansicht,
- Fig. 2: eine Dichtung in einer Vorderansicht in einer Einzeldarstellung,
- Fig. 3: ein Gasgeneratorgehäuse mit zugeordnetem Kolben sowie Dichtung entsprechend Figur 1 in einer herausgezogenen Darstellung,
- Fig. 4: ein weiteres Ausführungsbeispiel der Dichtung gemäß Figur 2 in Einzeldarstellung in Vorderansicht,
- Fig. 5: den Gegenstand der Figur 4 in einer geschnittenen Seitenansicht.

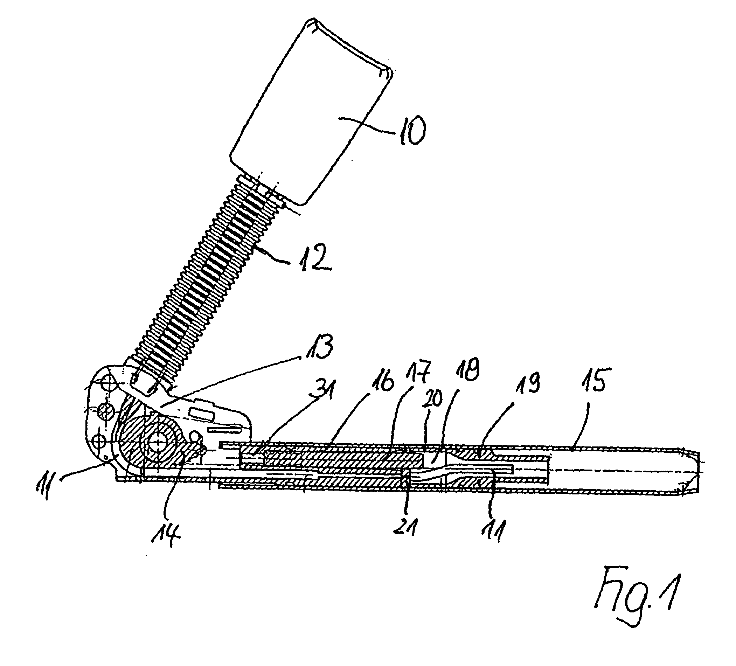

Die in Figur 1 dargestellte Straffvorrichtung ist als sogenannter Schloßstraffer ausgebildet, bei welchem ein Sicherheitsgurtschloß 10 als Sicherheitsgurtkomponente gestrafft, also über ein an das Sicherheitsgurtschloß 10 angeschlossenes Seil 11 in Richtung der Straffvorrichtung eingezogen wird. Die Erfindung ist allerdings nicht auf derartige Schloßstraffer beschränkt, vielmehr kann an dem Seil 11 beispielsweise auch eine Gurtschlaufe gehaltert sein, so daß der Sicherheitsgurt unmittelbar gestrafft wird. Das bei dem dargestellten Ausführungsbeispiel als Doppelseil mit zwei parallel zueinander angeordneten Seilsträngen ausgebildete Seil 11 ist über einen fahrzeugfest zu verankernden Umlenkblock 13 geführt, wobei zwischen Umlenkblock 13 und Sicherheitsgurtschloß 10 ein Faltenbalg 12 zur Abdeckung des Seils 11 angeordnet ist. In dem Umlenkblock 13 wird das Seil 11 umgelenkt und geradlinig in ein an den Umlenkblock 13 anschließendes Rohr 15 eingeführt, wobei in dem Umlenkblock 13 eine Exzenterklinke 14 als Rücklaufsperre angeordnet ist, die nach Abschluß der Straffbewegung einen Auszug des Seils 11 aus dem Umlenkblock 13 verhindert.

In dem die eigentliche Straffvorrichtung beinhaltenden Rohr 15 ist ein Gasgeneratorgehäuse 16 eingesetzt, in welchem ein Gasgenerator 17 angeordnet ist. Der Gasgenerator 17 füllt nur einen Teil des Querschnitts des Gasgeneratorgehäuses 16 aus, wobei durch das Gasgeneratorgehäuse 16 in parallelem Verlauf zum Gasgenerator 17 das Seil 11 hindurchgeführt wird. Auf der dem Umlenkblock 13 abgewandten Seite des Gasgeneratorgehäuses 16 ist ein Druckraum 18 belassen, in den nach Auslösung des Gasgenerators 17 die von diesem erzeugten Gase eintreten. An den Druckraum 18 schließt ein in dem Rohr 15 beweglicher Kolben 19 an, an dem das Seil 11 angeschlagen ist. Zwischen Kolben 19 und Gasgeneratorgehäuse 16 ist ein Distanzstück 20 angeordnet.

Die Ausbildung der Straffvorrichtung ist dabei so getroffen, daß nach Auslösung des Gasgenerators 17 die von diesem erzeugten Gase den Kolben 19 in dem Rohr 15 antreiben, so daß der Kolben 19 das an ihm festgemachte Seil 11 hinter sich herzieht und so das Sicherheitsgurtschloß 10 strafft.

Zur Abdichtung des Druckraums 18 gegen die Durchführung des Seils 11 durch das Gasgeneratorgehäuse 16 ist in den Druckraum 18 eine Dichtung 21 eingesetzt, deren Dichtungskörper 22 eine, im vorliegenden Fall für die Hindurchführung des Doppelseils 11 nach Art einer "8" gestaltete Durchtrittsöffnung 23 aufweist, ferner eine Durchtrittsöffnung 24 zur Hindurchführung des über das Gasgeneratorgehäuse 16 vorstehenden Gasgenerators 17, so daß die von diesem erzeugten Gase unmittelbar in den Druckraum 18 eintreten und nicht durch die Dichtung 21 hindurchgeführt werden müssen.

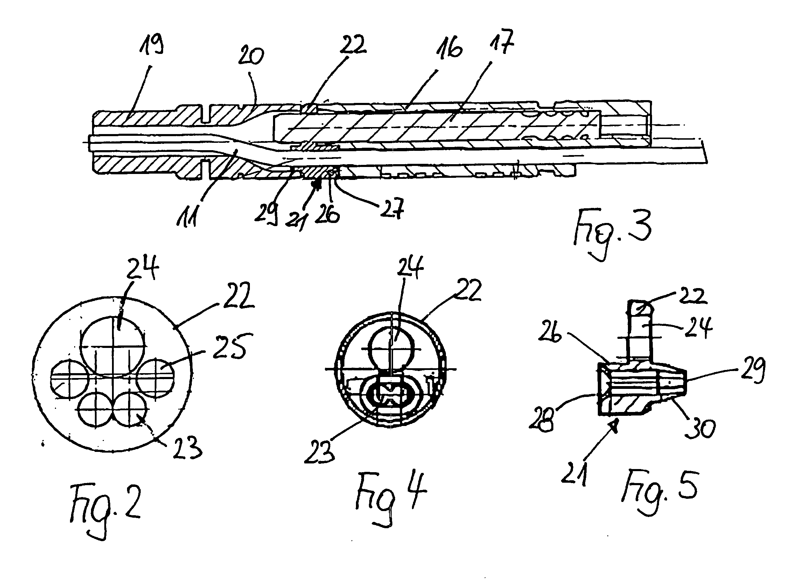

Wie sich aus Figur 2 entnehmen läßt, ist nach einem ersten Ausführungsbeispiel der Dichtungskörper 22 gegenüber dem Gasgeneratorgehäuse 16 dadurch fixiert und zentriert, daß der Dichtungskörper 22 mit an ihm ausgebildeten Öffnungen 25 auf axial von dem Gasgeneratorgehäuse 16 stirnseitig abstehende Zapfen aufsteckbar ist; hiermit ist auch eine Erleichterung der Montage verbunden.

In Figur 3 ist ein anderes Ausführungsbeispiel der Anordnung und damit der Montagemöglichkeit für die Dichtung 21 dargestellt, wobei die Dichtung 21 zwischen dem Distanzstück 20 und dem Gasgeneratorgehäuse 16 eingesetzt ist und mit ihrem äußeren Umfang mit Distanzstück 20 und Gasgeneratorgehäuse 16 bündig abschließt und dadurch gegen die Wandung des Rohres 15 anliegt und dichtet.

Wie sich hierzu aus den Figuren 4 und 5 entnehmen läßt, weist der Dichtungskörper 22 zunächst die Durchtrittsöffnungen 23 und 24 für das Seil 11 und den Gasgenerator 17 auf. Wie näher aus Figur 5 ersichtlich, ist an dem Dichtungskörper 22 in der Verlängerung seiner Durchtrittsöffnung 23 für das Seil 11 ein axial zum Generatorgehäuse 16 vorspringender Vorsprung 26 angeordnet, durch den sich die Durchtrittsöffnung 23 für das Seil 11 erstreckt, wobei sich die Durchtrittsöffnung am Ende des Vorsprunges 26 zu einem Trichter 28 erweitert. Soweit der Dichtungskörper 22 bei der Montage der Straffvorrichtung auf das Seil 11 aufzufädeln ist, wird durch den Trichter 28 das Aufstecken des Dichtungskörpers 22 erleichtert. Die Fixierung und Zentrierung des Dichtungskörpers 22 gegenüber dem Gasgeneratorgehäuse 16 bzw. in dem Rohr 15 ist dadurch verwirklicht, daß das Gasgeneratorgehäuse 16 im Bereich des Vorsprungs 26 einen entsprechend ausgebildeten Rücksprung 27 aufweist.

Zur Verbesserung der Dichtwirkung des Dichtungskörpers 22 gegenüber dem durch ihn hindurchgeführten Seil 11 im Bereich der Durchtrittsöffnung 23 ist zusätzlich an dem Dichtungskörper 22 ein in Verlängerung der Durchtrittsöffnung 23 axial in den Druckraum 18 vorragender und das hindurchgeführte Seil umschließender Ansatz 29 ausgebildet. Durch den auf den Dichtungskörper 22 nach Auslösung des Gasgenerators 17 einwirkenden Druck wird der Ansatz 29 zusammengedrückt und legt sich dabei zusätzlich abdichtend konzentrisch gegen das hindurchgeführte Seil 11 an. Hierzu ist die Außenfläche 30 des Ansatzes 29 mit einem von dem Dichtungskörper 22 in Richtung auf das Seil 11 geneigten Verlauf ausgebildet.

Eine entsprechende Dichtwirkung im Bereich der Durchtrittsöffnung 24 für den Gasgenerator 17 ist aus dem Grunde nicht in dem gleichen Maße erforderlich, weil das Gasgeneratorgehäuse 16 an seinem dem Druckraum 18 gegenüberliegenden Ende gegen das Rohr 15 mittels einer zusätzlichen Dichtung 31 abgedichtet ist.

## Patentansprüche

1. Straffvorrichtung für einen Sicherheitsgurt mit einem Rohr (15) zur Führung eines druckgasgetriebenen Kolbens (19) und mit einem an den Kolben (19) angeschlossenen und mit einer zu straffenden Sicherheitsgurtkomponente verbundenen Seil (11), wobei ein der Aufnahme des Gasgenerators (17) dienendes Gasgeneratorgehäuse (16) in dem Rohr (15) angeordnet und zwischen Gasgeneratorgehäuse (16) und Kolben (19) ein Druckraum (18) belassen ist, und wobei das Seil (11) in paralleler Anordnung zum Gasgenerator (17) durch das Gasgeneratorgehäuse (16) und durch den Druckraum (18) bis zum Kolben (19) geführt ist, **dadurch gekennzeichnet, daß** in dem Rohr (15) eine den Druckraum (18) gegen das Gasgeneratorgehäuse (16) abdichtende und sich bei Druckbeaufschlagung gegen das Gasgeneratorgehäuse (16) abstützende Dichtung (21) angeordnet ist und in dem Dichtungskörper (22) Durchtrittsöffnungen (23, 24) für den aus dem Gasgeneratorgehäuse (16) in den Druckraum (18) vorstehenden Gasgenerator (17) und das Seil (11) angeordnet sind.

2. Straffvorrichtung nach Anspruch 1, **dadurch gekennzeichnet, daß** der Dichtungskörper (22) in Verlängerung der Durchtrittsöffnung (23) für das Seil (11) einen axial in den Druckraum (18) vorragenden und das Seil (11) umschließenden Ansatz (29) aufweist, dessen Außenfläche (30) von dem Dichtungskörper (22) in Richtung auf das Seil (11) geneigt ist.

3. Straffvorrichtung nach Anspruch 1 oder 2, **dadurch gekennzeichnet, daß** der Innendurchmesser der Durchtrittsöffnung (23) für das Seil (11) gleichgroß ist dem Durchmesser des Seils (11).

4. Straffvorrichtung nach Anspruch 1 oder 2, **dadurch gekennzeichnet, daß** der Innendurchmesser der Durchtrittsöffnung (23) für das Seil (11) geringer ist als der Durchmesser des Seils (11).

5. Straffvorrichtung nach einem der Ansprüche 1 bis 4, **dadurch gekennzeichnet, daß** der Dichtungskörper (22) gegenüber dem Gasgeneratorgehäuse (16) zentriert ist.

6. Straffvorrichtung nach Anspruch 5, **dadurch gekennzeichnet, daß** das Gasgeneratorgehäuse (16) axial vorstehende Zapfen und der Dichtungskörper (22) auf die Zapfen aufsteckbare Aufnahmeöffnungen (25) aufweisen.

7. Straffvorrichtung nach Anspruch 5, **dadurch gekennzeichnet, daß** der Dichtungskörper (22) in der Verlängerung seiner Durchtrittsöffnung (23) für das Seil (11) einen axial zum Gasgeneratorgehäuse (16) vorspringenden Vorsprung (26) aufweist und das Gasgeneratorgehäuse (16) in dem von dem Vorsprung (26) des Dichtungskörpers (22) erfaßten Bereich mit einem entsprechenden Rücksprung (27) versehen ist.

8. Straffvorrichtung nach Anspruch 7, **dadurch gekennzeichnet, daß** die sich durch den Vorsprung (26) erstreckende Durchtrittsöffnung (23) für das Seil (11) sich am Ende des Vorsprunges (26) trichterförmig erweitert.

9. Straffvorrichtung nach einem der Ansprüche 1 bis 8, **dadurch gekennzeichnet, daß** zwischen der Komponente (10) des Sicherheitsgurtes und dem Kolben (19) ein Doppelseil angeordnet ist und der Dichtungskörper (22) zwei Durchtrittsöffnungen (23) für die beiden Seile des Doppelseils (11) aufweist.

10. Straffvorrichtung nach einem der Ansprüche 1 bis 9, **dadurch gekennzeichnet, daß** der Dichtungskörper (22) auf seinem äußeren, gegen die Wandung des Rohres (15) anliegenden Umfang eine Dichtlippe aufweist.

11. Straffvorrichtung nach einem der Ansprüche 1 bis 10, **dadurch gekennzeichnet, daß** der Dichtungskörper aus einem elastischen Material besteht.

12. Straffvorrichtung nach einem der Ansprüche 1 bis 11, **dadurch gekennzeichnet, daß** der Dichtungskörper aus Kunststoff besteht.

13. Straffvorrichtung nach einem der Ansprüche 1 bis 12, **dadurch gekennzeichnet, daß** das Gasgeneratorgehäuse (16) an seinem dem Druckraum (18) gegenüberliegenden Ende gegen das Rohr (15) abgedichtet ist.

## Claims

1. A tensioning device for a seat belt with a conduit (15) for guiding a pressurized gas driven piston (19) and with a cable (11) connected to the piston (19) and interconnected to a seat belt component that is to be tensioned, whereby a gas generator housing (16) is arranged in the conduit (15) for receiving a gas generator (17) and a pressure space (18) is left between the gas generator housing (16) and the piston (19), and whereby the cable (11) is guided in parallel arrangement to the gas generator (17) through the gas generator housing (16)and through the pressure space (18) to ultimately reach the piston (19), **characterized in that** a seal (21) is disposed in the conduit (15) that seals the pressure space (18) against the gas generator housing (16) and that is supported against the gas generator housing (16) upon being impacted by a pressure pulse and that pass through openings (23,24) are disposed in the seal body (22) for the gas generator (17) projecting into the pressure space (18) and for the cable (11).

2. A tensioning device according to claim 1, **characterized in that** the seal body (22) comprises a shoulder (29) in the extension of the pass through opening (23) for the cable (11), the shoulder projecting axially into the pressure space (18) and enclosing the cable (11), and the outer surface of the shoulder being inclined in the direction from the seal body (22) toward the cable (11).

3. A tensioning device according to claim 1 or claim 2, **characterized in that** the inner diameter of the pass through opening (23) for the cable (11) is the same dimension as the diameter of the cable (11).

4. A tensioning device according to claim 1 or 2, **characterized in that** the inner diameter of the pass through opening (23) for the cable (11) is smaller than the diameter of the cable (11).

5. A tensioning device according to one of the claims 1 - 4, **characterized in that** the seal body (22) is centered relative to the gas generator housing (16).

6. A tensioning device according to claim 5, **characterized in that** the gas generator housing (16) comprises axially projecting pins and the seal body (22) comprises receipt openings (25) that can be inserted onto the pins.

7. A tensioning device according to claim 5, **characterized in that** the seal body (22) comprises a projection (26) projecting axially toward the gas generator housing (16) in the extension of the pass through opening (23) for the cable (11) and the gas generator housing (16) is provided with a corresponding rebound structure (27) in the region of the seal body (22) receiving the projection (26).

8. A tensioning device according to claim 7, **characterized in that** the pass through opening (23) extending through the projection (26) for the cable (11) is, at the end of the projection (26), expanded in a conical-shaped manner.

9. A tensioning device according to one of the claims 1 - 8, **characterized in that** a double cable (11) is arranged between the component (10) of the seat belt and the piston (19) and the seal body (22) comprises two pass through openings (23) for the pair of cables of the double cable (11).

10. A tensioning device according to one of the claims 1 - 9, **characterized in that** the seal body (22) comprises a sealing lip on the outer circumference of the seal body lying against the wall of the conduit (15).

11. A tensioning device according to one of the claims 1 - 10, **characterized in that** the seal body is comprised of an elastic material.

12. A tensioning device according to one of the claims 1 - 11, **characterized in that** the seal body is comprised of plastic.

13. A tensioning device according to one of the claims 1 - 12, **characterized in that** the gas generator housing (16) is, on its end lying opposite to the pressure space (18), sealed off relative to the conduit (15).

## Revendications

1. Dispositif de tension pour une ceinture de sécurité avec un tube (15) servant à guider un piston mû par un gaz sous pression (19) et avec un câble (11) raccordé au piston (19) et relié à un composant de la ceinture de sécurité à tendre, dans lequel un boîtier de générateur de gaz (16) destiné à recevoir le générateur de gaz (17) est disposé dans le tube (15) et un espace de compression (18) est ménagé entre le boîtier de générateur de gaz (16) et le piston (19) et dans lequel le câble (11) est guidé parallèlement au générateur de gaz (17) dans le boîtier de générateur de gaz (16) et dans l'espace de compression (18) jusqu'au piston (19), **caractérisé en ce qu'**un joint (21) qui assure l'étanchéité de l'espace de compression (18) par rapport au boîtier de générateur de gaz (16) et qui vient en appui contre le boîtier de générateur de gaz (16) lorsqu'une pression est appliquée est disposé dans le tube (15) et **en ce que** des orifices de passage (23, 24) sont ménagés dans le corps du joint (22) pour le générateur de gaz (17) dépassant du boîtier de générateur de gaz (16) dans l'espace de compression (18) et pour le câble (11).

2. Dispositif de tension selon la revendication 1, **caractérisé en ce que**, dans le prolongement de l'orifice de passage (23) du câble (11), le corps de joint (22) présente un téton (29) dépassant axialement dans l'espace de compression (18) et entourant le câble (11) dont la surface extérieure (30) est inclinée depuis le corps de joint (22) en direction du câble (11).

3. Dispositif de tension selon la revendication 1 ou 2, **caractérisé en ce que** le diamètre intérieur de l'orifice de passage (23) du câble (11) est égal au diamètre du câble (11).

4. Dispositif de tension selon la revendication 1 ou 2, **caractérisé en ce que** le diamètre intérieur de l'orifice de passage (23) du câble (11) est inférieur au diamètre du câble (11).

5. Dispositif de tension selon l'une des revendications 1 à 4, **caractérisé en ce que** le corps de joint (22) est centré par rapport au boîtier de générateur de gaz (16).

6. Dispositif de tension selon la revendication 5, **caractérisé en ce que** le boîtier de générateur de gaz (16) présente des ergots dépassant axialement et **en ce que** le corps de joint (22) présente des orifices réceptacles encliquetables sur les ergots (25).

7. Dispositif de tension selon la revendication 5, **caractérisé en ce que**, dans le prolongement de son orifice de passage (23) pour le câble (11), le corps de joint (22) présente une saillie (26) dépassant axialement du boîtier de générateur de gaz (16) et **en ce que** le boîtier de générateur de gaz (16) est muni d'une partie en retrait (27) correspondant à la zone définie par la saillie (26) du corps de joint (22).

8. Dispositif de tension selon la revendication 7, **caractérisé en ce que** l'orifice de passage (23) qui s'étend à travers la saillie (26) pour le câble (11) s'élargit en forme d'entonnoir à l'extrémité de la saillie (26).

9. Dispositif de tension selon l'une des revendications 1 à 8, **caractérisé en ce qu'**un câble double est disposé entre le composant (10) de la ceinture de sécurité et le piston (19) et **en ce que** le corps de joint (22) présente deux orifices de passage (23) pour les deux câbles du câble double (11).

10. Dispositif de tension selon l'une des revendications 1 à 9, **caractérisé en ce que** le corps de joint (22) présente un joint d'étanchéité à lèvre sur sa périphérie extérieure, contre la paroi du tube (15).

11. Dispositif de tension selon l'une des revendications 1 à 10, **caractérisé en ce que** le corps de joint est fait d'un matériau élastique.

12. Dispositif de tension selon l'une des revendications 1 à 11, **caractérisé en ce que** le corps de joint est en matière plastique.

13. Dispositif de tension selon l'une des revendications 1 à 12, **caractérisé en ce que**, à son extrémité opposée à l'espace de compression (18), le boîtier de générateur de gaz (16) est étanchéifié contre le tube (15).
